# EUROPEAN PATENT APPLICATION

(11) **EP 4 249 147 A1**
(43) Date of publication of application: **27.09.2023**
(21) Application number: 22164152.5
(22) Date of filing: 24.03.2022
(51) Int. Cl.: B22D 19/00, B22D 19/04, F01D 5/34, F04D 29/32, F04D 29/38, B22D 21/00, B22D 21/04

(54) **METHOD FOR MANUFACTURING A ROTOR ASSEMBLY**

(71) Applicant: Lilium eAircraft GmbH, 82234 Wessling (DE)
(72) Inventor: VERMEIREN, Sébastien, 80997 Munich (DE)
(74) Representative: Weickmann & Weickmann PartmbB

(57) **Abstract**

The present invention relates to a method for manufacturing a rotor assembly, comprising a plurality of individual blade elements (12a, 12b) extending between respective inner (12a1, 12b1) and outer ends and a hub section, the method comprising the following steps:
- providing the plurality of individual blade elements (12a, 12b) in a configuration in accordance with their intended orientation with respect to each other;
wherein the blade elements (12a, 12b) are each jointly provided at sections of their of their respective extensions with an outer mold shell (14);
- providing an inner mold shell (16) at a position radially inside of the outer mold shell (14);
- providing side mold shells such that between the outer mold shell (14), inner mold shell (16) and side mold shells a casting space (18) is formed; and
- filling the casting space (18) with a casting material in order to form the hub section.

## Description

The present invention relates to a method for manufacturing a rotor assembly, comprising a plurality of individual blade elements extending between respective inner and outer ends and a hub section, as well as to a rotor assembly manufactured by means of said method.

Rotor assemblies are used in different types of devices, such as fans, compressors and turbines, wherein the individual blade elements extend outward from a hub section, which also serves as an interface to a superordinate structure. While the number and particular shape of the individual blade elements strongly depend on the intended use case of the rotor assembly, there are certain scenarios in which the highest possible number of blades is desired, for example for reasons of efficiency or the reduction of operating noise.

Traditionally, such rotor assemblies have mainly been manufactured by two different methods, on the one hand by providing a dovetail interface to each of the individual blade elements and corresponding accommodation sections for the dovetail interfaces in the hub section of the rotor assembly, while on the other hand, it is also known to manufacture so-called blisks, in which the entire rotor assembly is machined from a single monolithic block, such that the hub section, the plurality of blades and possibly also an interface section are comprised in a single one-piece entity, or in which the individual blade elements are welded to the hub section.

However, both of the above-mentioned manufacturing techniques have drawbacks, especially in cases in which the highest possible number of blades shall be provided with the hub section of the corresponding rotor assembly. In particular, blade elements attached to a hub section through a dovetail interface are generally heavy, as not only the dovetails themselves contribute to the weight of the assembly, but also the hub section needs to be constructed in a relatively thick manner. Additionally, there needs to be a sufficient blade-to-blade distance in order to enable the forces present during operation of the rotor assembly to be transmitted from the blade elements to the hub section and further to an interface section through the individual dovetail interfaces. Said required blade-to-blade distance limits the maximum number of blades that can be provided to a single hub section with such manufacturing methods.

On the other hand, in the case of blisks, the total mass of the rotor assembly may be lower, since the necessity of dovetail interfaces has been removed from the rotor; however, a minimum blade-to-blade distance still needs to be ensured, in order to allow a sufficiently sized cutting or welding tool to pass between neighboring blades to machine or to weld the blades to the hub in an economical manner. Although very small tools might be used in order to reduce the blade-to-blade distance, this measure would rapidly increase the machining time as well as the associated costs and would possibly be prone to failure.

It is therefore the object of the present invention to provide an alternative and improved method for manufacturing such a rotor assembly, which is in on the one hand relatively easy and cost-efficient to perform, while on the other hand allows for a minimal blade-to-blade distance and as such the highest possible number of blade elements around the circumference of the hub section without weakening the overall structural integrity of the rotor assembly and preserving the mechanical properties of rotor assemblies manufactured by methods known in the art.

For this purpose, the method for manufacturing a rotor assembly according to the present invention comprises the steps of providing a plurality of individual blade elements in a configuration in accordance with their intended orientation with respect to each other in the finalized rotor assembly, wherein the blade elements are each jointly provided at sections of their respective extensions with an outer mold shell, providing an inner mold shell at a position radially inside of the outer mold shell, providing side mold shells such that between the outer mold shell, the inner mold and the side mold shells a casting space is formed, and filling the casting space with a casting material in order to form the hub section.

After having the casting material cooled down from its casting temperature, at which it has to be in a fluid state, and after solidification thereof, the individual mold shells can be removed, and the finalized rotor assembly can be subjected to further machining and finishing steps such as sanding, smoothening, hardening, etc. Thus, by directly casting a hub section around the roots or inner ends of individual blade elements, a good geometric bonding between all blades and the hub section at low production unit costs per unit can be achieved by means of the method according to the present invention.

While the outer mold shell in certain embodiments of the present invention may be a monolithic component provided with apertures through which the individual blade elements can be passed in order to arrange them in their intended orientation, in other embodiments each of the blade elements may be provided with a cover element in such a manner that the cover elements jointly form the outer mold shell. By forming the outer mold shell from the individual cover elements, slight variations between the blade elements may be accounted for at an early stage of the manufacturing process and the mounting of the blade elements in their intended configuration may be facilitated.

While the actual layout of the different mold shells can vary between different embodiments of the present invention and may depend on the particular intended shape and dimensions of the hub section, in one or more embodiments, the outer mold shell or the cover elements may further at least partially form the side mold shells as well such that they not only extend in the circumferential and axial directions but at least partially also in the radial direction.

While it is in principle possible that the inner ends of at least some of the blade elements extend beyond the inner mold shell during the casting step and thus the hub section in the finalized rotor assembly, such that the inner mold shell has to be provided with suitable apertures through which the blade elements can extend during the casting step, there are also embodiments conceivable in which the inner mold shell is positioned radially inside of the inner ends of all of the blade elements, such that said inner ends are fully surrounded by casting material during the casting step and thus embedded in the hub section in the finalized rotor assembly.

In order to strengthen the finalized rotor assembly and in particular the cohesion between the blade elements and the hub section, the blade elements may be provided with features for creating a mechanical interlock with the casting material, which may in particular at least partially extend in a circumferential and/or axial direction of the casting space. By providing said features, a hooking effect is achieved between the solidified casting material forming the hub section and the blade elements, which enables a better distribution of forces acting on the blade elements during operation of the finalized rotor assembly.

While in certain embodiments of the method according to the present invention the hub section may be provided with interfaces for connecting the rotor assembly to an external component only after the casting step has been completed, in other embodiments, the mold shells may be formed such that during the casting process itself the hub section is formed integrally with at least one functional component, such as a flange member for connecting the rotor assembly to an external component, a spinner section or a shaft section.

While there are in principle no constraints on how the individual blade elements themselves are manufactured before they are arranged in the configuration in accordance with their intended orientation before the casting step, they may in particular be manufactured by means of forging, casting or additive processes and additional machining steps may also be performed on them once the casting step has been completed.

While it is also conceivable that the blade elements can be made from substantially the same material as is used as casting material, which may lead to the parts of the blade elements embedded in the hub section at least partially melting during the casting process unless sufficient cooling is provided to them, it may be beneficial if the blade elements are made from a material which is different from the casting material, and in particular possesses a higher melting point temperature to avoid any structural changes in the blade elements during the casting step. For example, the blade elements may be made from steel, titanium or a titanium alloy, wherein the casting material may be aluminum, magnesium, an aluminum alloy or a magnesium alloy.

While there is also basically no constraint on the materials used for the mold shells, as long as they are able to withstand the temperatures and stress of the casting step, at least some of them may comprise sand and bonding compounds, thus resulting in a sand casting process, which has been shown to produce favorable results concerning surface properties of the resulting cast elements as well as good handling properties during the preparation and performing of the casting step itself.

While the blade elements may be provided and held in their configuration in accordance with their intended orientation with respect to each other by any suitable means, in some embodiments of the present invention they may be supported in their intended orientation by means of suction arms, which guarantee a high precision of the respective orientation of the individual blade elements while reducing the danger of scratching or damaging the blade elements as compared to for example mechanical clamping devices.

As already mentioned above, according to a second aspect, the present invention also relates to a rotor assembly, comprising a hub section and a plurality of individual blade elements extending from the hub section to respective outer ends, manufactured by means of a method according to the present invention and described above, in which blade elements are embedded in the material of the hub section and extend therefrom without any additional bonding means.

One additional advantage of the rotor assembly according to the present invention relates to the fact that since the blade elements are embedded in the solidified casting material and as such have a large contact surface with the hub section, by means of which all acting forces can be distributed evenly, in rotor assemblies according to the invention fillets on the contact sections of the blade elements with the hub section may no longer be necessary such that the blade elements may extend out of the hub section under any desired angle, for example a right angle, without any additional material necessary at the transition points between the hub section and the blade elements. This may increase the efficiency of the device provided with the rotor assembly according to the invention, since for example in a ducted fan engine, which comprises a cylindrical duct and a rotor assembly according to the present invention, the overall flow cross section within the cylindrical duct may be slightly increased by means of disposing of fillets or other reinforcement elements at the outer circumference of the hub section which are often required in rotor assemblies manufactured by methods known in the art in order to stabilize the blade elements at their bases.

While in principle, the blade elements may differ from one another in their geometrical or material properties as long as certain properties of the rotor assembly concerning symmetry are fulfilled, in certain embodiments of the present invention it may be intended that the blade elements are all identical and equally spaced in a circumferential direction around the hub section.

One particular area, in which rotor assemblies according to the present invention may be used, are aircrafts in which ducted fans comprising a cylindrical duct and a rotor assembly according to the invention are used for propulsion of the aircraft.

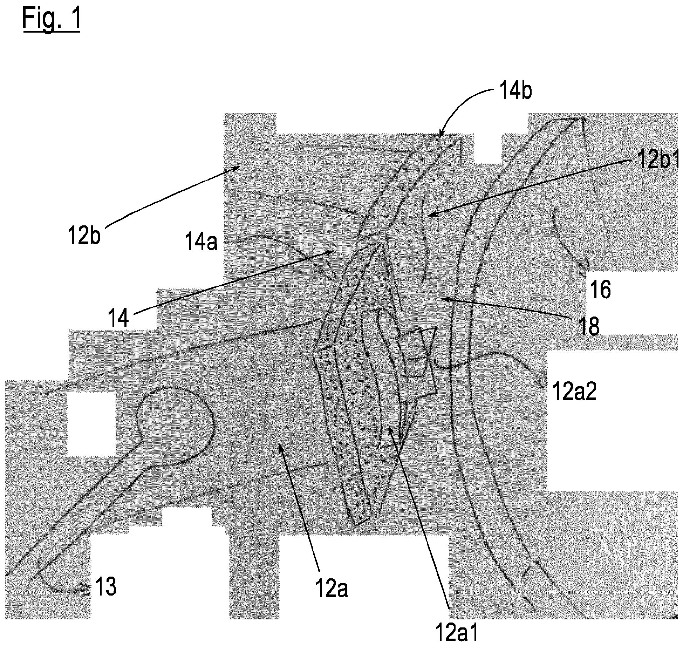

Further features and advantages of the present invention will become even clearer in the context of the following description of an embodiment of the invention, when regarded together with the accompanying Fig. 1.

Said Fig. 1 schematically shows blade elements as well as mold shells during a manufacturing process of a rotor assembly according to the invention.

In said Fig. 1, two individual blade elements 12a and 12b are schematically shown, which have already been positioned according to a configuration in accordance with their intended orientation with respect to each other in the finalized rotor assembly. For this purpose, a single suction arm 13 is shown, which holds the blade element 12a, while a similar suction arm or for example also a clamping device may be additionally provided for the other depicted blade element 12b, however, it is not shown in Fig. 1 for reasons of legibility.

The blade element 12a may be identical concerning its dimensions to the second blade element 12b, wherein additional blade elements, which are also not shown, may be provided such that the blade elements 12a, 12b, ... are lined up in a manner that they are equidistantly provided around a radial center with respect to which they all extend from an inner end 12a1, 12b1 ... to outer ends, which are not shown in Fig. 1.

As can also be seen in Fig. 1, the blade element 12a at its radially inner end 12a1 is provided with features 12a2 for providing a mechanical interlock and improved adherence to the below to be discussed casting material. Similar or identical features may also be provided at the radially inner ends of the other blade elements.

In Fig. 1, each of the blade elements 12a, 12b is provided with a cover element 14a, 14b in such a manner that the cover elements 14a, 14b surround the blade elements 12a, 12b near their radially inner ends 12a1, 12b1 and jointly form an outer mold shell 14 with a circular cross-section by interlocking in a tight manner. Radially further inside from the outer mold shell 14 and the inner ends 12a1, 12b1 of the blade elements 12a, 12b, a cylindrical inner mold shell 16 with a circular cross-section is provided and also held in place by suitable means. The outer mold shell 14 together with the inner mold shell 16 and additional side mold shells which have not yet been installed in the configuration of Fig. 1, form a casting space 18, which presents itself as a ring-shaped hub.

In the method for manufacturing the rotor assembly according to the present invention, the thus formed casting space can be filled with a liquid casting material, which afterwards cools down and solidifies in such a manner that a hub section is formed, in which all of the blade elements 12a, 12b, ... are embedded with their radial inner ends terminating inside the hub section. After solidification of the casting material, the outer mold shell 14 and in particular the cover elements 14a, 14b as well as the inner mold shell 16 and the in Fig. 1 yet to be installed side mold shells can be removed and the hub section can undergo additional finishing treatments such as sanding or hardening.

## Claims

1. Method for manufacturing a rotor assembly, comprising a plurality of individual blade elements (12a, 12b) extending between respective inner (12a1, 12b1) and outer ends and a hub section,
the method comprising the following steps:
- providing the plurality of individual blade elements (12a, 12b) in a configuration in accordance with their intended orientation with respect to each other;
wherein the blade elements (12a, 12b) are each jointly provided at sections of their respective extensions with an outer mold shell (14);
- providing an inner mold shell (16) at a position radially inside of the outer mold shell (14);
- providing side mold shells such that between the outer mold shell (14), inner mold shell (16) and side mold shells a casting space (18) is formed; and
- filling the casting space (18) with a casting material in order to form the hub section.

2. Method according to claim 1,
wherein each of the blade elements (12a, 12b) is provided with a cover element (14a, 14b) in such a manner that the cover elements (14a, 14b) jointly form the outer mold shell (14).

3. Method according to claim 1 or claim 2,
wherein the outer mold shell (14) or the cover elements (14a, 14b) further at least partially form the side mold shells.

4. Method according to any of the preceding claims,
wherein the inner mold shell (16) is positioned radially inside of the inner ends (12a1, 12b1) of all of the blade elements (12a, 12b).

5. Method according to any of the preceding claims,
wherein the blade elements (12a, 12b) are provided with features (12a2) for creating a mechanical interlock with the casting material, in particular at least partially extending in a circumferential and/or axial direction of the casting space (18).

6. Method according to any of the preceding claims,
wherein the mold shells (14, 16) are formed such that during the casting process the hub section is formed integrally with at least one functional component, such as a flange member for connecting the rotor assembly to an external component, a spinner section or a shaft section.

7. Method according to any of the preceding claims,
wherein the blade elements (12a, 12b) are manufactured by means of a forging, casting or additive process.

8. Method according to any of the preceding claims,
wherein the blade elements (12a, 12b) are made from a material which is different from the casting material and in particular possesses a higher melting point temperature.

9. Method according to claim 8,
wherein the blade elements (12a, 12b) are made from steel, titanium or a titanium alloy and the casting material is aluminum, magnesium, an aluminum alloy or a magnesium alloy.

10. Method according to any of the preceding claims,
wherein at least some of the mold shells (14, 16) comprise sand and bonding compounds.

11. Method according to any of the preceding claims,
wherein the blade elements (12a, 12b) are held in their intended orientation by means of suction arms (13).

12. Rotor assembly, comprising a hub section and a plurality of individual blade elements (12a, 12b) extending from the hub section to respective outer ends, manufactured by means of a method according to any of the preceding claims.

13. Rotor assembly according to claim 12,
wherein the blade elements (12a, 12b) are identical and equally spaced in a circumferential direction around the hub section.

14. Ducted fan engine, comprising a cylindrical duct, a rotor assembly according to any of claims 12 and 13 and a motor driving the rotor assembly.

15. Aircraft, comprising at least one ducted fan engine according to the preceding claim.
